# EUROPEAN PATENT SPECIFICATION

(11) **EP 3 862 218 B1**
(45) Date of publication and mention of the grant of the patent: **29.11.2023**
(21) Application number: 20155356.7
(22) Date of filing: 04.02.2020
(51) Int. Cl.: B60L 58/21, B60L 58/22, B60L 7/16

(54) **BALANCING CHARGE LEVEL OF BATTERIES**
AUSGLEICHEN DES LADUNGSNIVEAUS VON BATTERIEN
ÉQUILIBRAGE DE NIVEAU DE CHARGE DE BATTERIES

(43) Date of publication of application: 11.08.2021
(73) Proprietor: Polestar Performance AB, 405 31 Gothenburg (SE)
(72) Inventor: Anders, Höckenström, 41465 Göteborg (SE); Pehrson, Hans, 423 39 Torslanda (SE); Moon, Jongseok, 421 73 Västra Frölunda (SE); Ragnerius, Erik, 426 68 Västra Frölunda (SE)
(74) Representative: Zacco Sweden AB

(56) References cited:
- EP-A1- 3 323 664
- DE-A1-102017 212 496
- GB-A- 2 550 955
- US-A1- 2003 122 512
- US-A1- 2018 105 060
- US-A1- 2019 176 729
- US-A1- 2020 055 404

## Description

### TECHNICAL FIELD

The disclosed subject matter relates to balancing charge level of a first battery and a second battery of a dual battery system.

### BACKGROUND

Battery powered electric vehicles are starting to play a significant role in the automotive industry, one of the reasons being a desire to decrease carbon emissions associated with the use of internal combustion engine powered transportation.

Accompanying this development, there is an increased demand on improved battery capacity of the battery powered electric vehicles, enabling improved performance thereof. Increased battery capacity may, however, have a negative effect on battery charging capabilities; in particular, the time required for charging of the electric vehicle may increase.

For example, currently available fast charging stations commonly support a charging voltage of 400 V. As a means to provide even faster charging of electric vehicles and/or to meet increased battery capacities, charging stations supporting a charging voltage of 800 V are suggested, and to some extent available. Existing battery powered electric vehicles typically have battery systems supporting an operating voltage of 400 V, and hence different solutions may be provided in order for such battery systems to be chargeable at a selectable first or second charging voltage, for example at a charging voltage of 400 V or 800 V. A vehicle allowing charging at two different voltages, by connecting two batteries in series or in parallel, is disclosed in US2019/176729 A1 (Link Bernard).

It is known to utilize a dual battery system comprising two batteries for powering propulsion of an electric vehicle, which two batteries may be electrically connectable in parallel or in series, by means of a switch arrangement. This enables the electric vehicle battery system to operate and/or charge at a first voltage, e.g. 400 V, and to operate and/or charge at a second voltage, higher than the first voltage, e.g. 800 V. In this way, the battery powered electric vehicle may be adapted to be charged at a selectable first or second charging voltage, without the use of, for instance, a voltage converter or transformer.

However, for a dual battery system as described above, configured to switch between parallel connection and series connection of the two batteries, inter alia to enable a first or a second charging voltage, charging capabilities greatly benefit from the two batteries being balanced in terms of charge level. The following patent publications disclose dual battery systems with balancing means: EP3323664 A1 (NextevLtd) and GB2550955 A (Arrival Ltd).

Thus, for such a dual battery system used for powering propulsion of an electric vehicle, in order to improve charging events thereof, there is a need for improved balancing strategies.

### SUMMARY

It is therefore an object of embodiments herein to provide an approach that overcomes or ameliorates at least one of the disadvantages of the prior art, or to provide a useful alternative.

The object above may be achieved by the subject matter disclosed herein. Embodiments are set forth in the appended claims, in the following description and in the drawings.

The disclosed subject matter relates to a method according to claim 1.

The disclosed subject matter further relates to a dual battery system according to claim 8.

Moreover, the disclosed subject matter relates to an electric vehicle comprising a first electric motor coupled in driving relationship to one or more rear wheels of the electric vehicle and a second electric motor coupled in driving relationship to one or more front wheels of the electric vehicle, which electric vehicle comprises the dual battery system described herein.

Thereby, there is introduced an approach by which the batteries of a dual battery system may be balanced in terms of charge level by the time the electric vehicle stops to charge. This has the positive effect that charging may be initiated directly when arriving at a charging stop, without any further actions necessary in order to prepare the dual battery system for charging. In other words, the charge balancing of the batteries occurs while driving the vehicle, i.e. during propulsion of the vehicle. By obtaining information on an upcoming charging event, a balancing strategy which involves selecting an adapted driving scenario is provided, such that upon arrival at the charging event, the batteries of the dual battery system have been balanced in terms of charge, whereby charging may be initiated directly. Moreover, another positive effect of the method as recited above, resulting in balanced charge of the batteries of the dual battery system, is that full charging capability may be utilized, e.g. 400 V or 800 V charging voltage, since the batteries may be connected in parallel mode or series mode during charging.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view illustrating an exemplifying dual battery system according to embodiments of the disclosure;
**Fig. 2** is a flowchart depicting an exemplifying method for balancing charge level of a first battery and a second battery respectively according to embodiments of the disclosure; and
**Fig. 3** illustrates a schematic block diagram of an exemplifying dual battery system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout.

In the following, according to embodiments herein which relate to balancing a charge level of a first battery and a second battery of a dual battery system, there will be disclosed an approach according to which improved balancing strategies are provided.

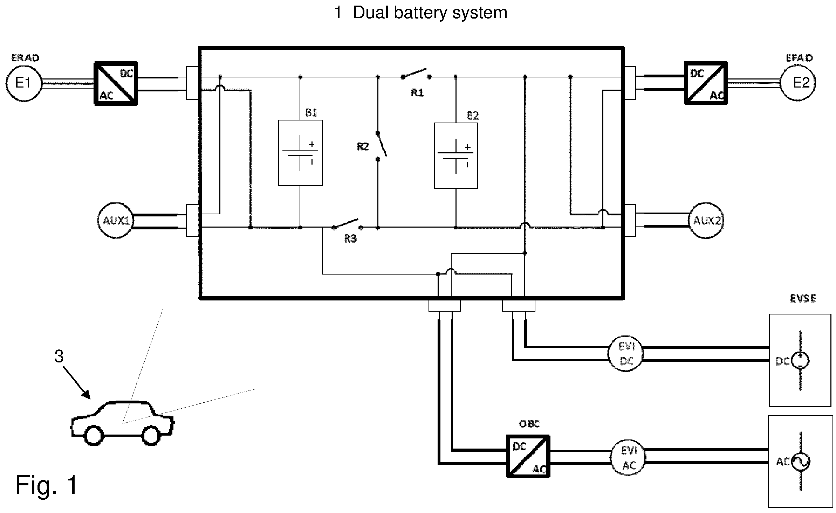

Referring to **Fig. 1**, there is depicted a schematic view of an exemplifying **dual battery system 1** according to embodiments of the disclosed subject matter. The dual battery system 1 is adapted for powering propulsion of an **electric vehicle 3**. The electric vehicle 3, which may comprise the dual battery system 1, may refer to any - e.g. known - electrically propelled vehicle, such as e.g. a passenger car. According to an example, the electric vehicle 3 may further potentially refer to an electric vehicle at least partly supporting autonomous driving. The expression "electric vehicle" may refer to "EV", "battery electric vehicle", "BEV", "electrically propelled vehicle" and/or "vehicle adapted to use one or more electric motors for propulsion".

The electric vehicle 3 comprises a **first electric motor E1** coupled in driving relationship to one or more rear wheels (not shown) and a **second electric motor E2** coupled in driving relationship to one or more front wheels (not shown). The dual battery system 1 comprises a **first battery B1** and a **second battery B2**, where the first battery B1 is adapted to provide electric power for driving the first electric motor E1 and the second battery B2 adapted to provide electric power for driving the second electric motor E2. Thereby, the first battery B1 is configured to be used to power rear-wheel drive propulsion of an electric vehicle 3, whereas the second battery B2 is configured to be used to power front-wheel drive propulsion of said electric vehicle 3. Accordingly, the dual battery system 1 supports being utilized in connection with an electrical vehicle 3, with the first battery B1 in connection with - and/or connectable to - a first electric motor E1 of the electric vehicle 3 coupled in driving relationship to one or more rear wheel of said electric vehicle 3, and the second battery B2 in connection with - and/or connectable to - a second electric motor E2 of the electric vehicle 3 coupled in driving relationship to one or more front wheels of said electric vehicle 3. Thus, the first battery B1 supports powering rear-wheel drive propulsion of an electric vehicle 3, whereas the second battery B2 supports powering front-wheel drive propulsion of said electric vehicle 3. Consequently, the dual battery system 1 may support different driving situations, where either the first B1 or the second battery B2 - or both - may be utilized. Furthermore, with the dual batteries B1, B2 rather than a single battery, an increased battery lifespan for an electric vehicle 3 is supported.

The first battery B1 may be connectable to the first electric motor E1 in any manner - e.g. known - deemed suitable for enabling providing power for driving the first electric motor E1. Correspondingly, the second battery B2 may be connectable to the second electric motor E2 in any manner - e.g. known - deemed suitable for enabling providing power for driving the second electric motor E2.

The expression the first/second battery is "adapted to provide" electric power may refer to the first/second battery is "adapted to support provision of" electric power, whereas the first/second battery is "adapted to provide electric power for driving" the first/second electric motor may refer to the first/second battery is "connectable and/or adapted to be connected to" the first/second electric motor.

Respective electric motor E1, E2 may refer to any - e.g. known - traction motor adapted to be used for propulsion of an electric vehicle 3. The first electric motor E1 may be connected to the one or more rear wheels in any known manner enabling and/or supporting the first electric motor E1 to drive the one or more rear wheels. Correspondingly, the second electric motor E2 may be connected to the one or more front wheels in any known manner enabling and/or supporting the second electric motor E2 to drive the one or more front wheels. The expression "a" first/second electric motor may refer to "at least a" first/second electric motor, whereas "electric motor" may refer to "traction motor", and further to "electric motor of the vehicle". Electric motor "coupled in driving relationship to" one or more rear/front wheels, on the other hand, may refer to electric motor "connected to" one or more rear/front wheels.

The first battery B 1 and the second battery B2 may respectively refer to any - e.g. known - electric-vehicle battery adapted to give power over sustained periods of time, such as e.g. a lithium-ion, lithium-ion polymer, lithium titanate oxide, lithium cobalt oxide, lead-acid, nickel-cadmium, nickel-metal hydride, zink-air and/or molten-salt battery, and the first battery B 1 may further differ from the second battery B2. The first battery B 1 and the second battery B2 may further respectively comprise any number of commonly known cells (not shown), and/or modules comprising stacked cells, deemed feasible for the application at hand, and the number of cells for respective first and second battery may for instance range from a single cell up to hundreds of cells. A number of cells of the first battery B 1 may differ from a number of cells of the second battery B2. Further, chemistry, size and/or physical shape of respective first B 1 and second battery B2 - and/or the cells comprised therein - may be selected as deemed suitable for the implementation at hand, and may potentially differ between the first B1 and second battery B2. The first B 1 and second battery B2 may further respectively comprise any known components enabling the first B1 and second battery B2 to respectively support powering propulsion of an electric vehicle 3 over sustained periods of time. The expression "battery" may refer to "electric-vehicle battery", "traction battery", "rechargeable battery" and/or "secondary battery", and according to an example further to "deep-cycle battery". Moreover, "battery" may refer to "battery pack", "battery comprising one or more cells and/or electrochemical cells" and/or "battery comprising one or more modules respectively comprising and/or stacking one or more cells".

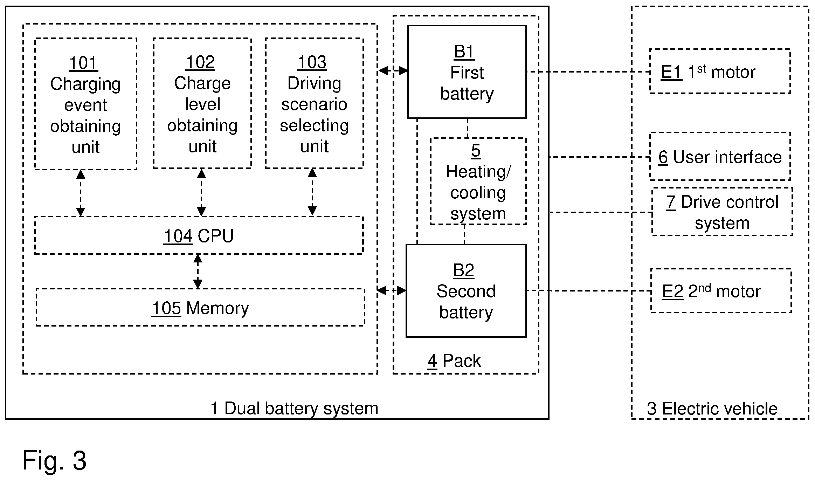

According to an example, the first and second batteries B 1, B2 may optionally be comprised in a common **battery pack 4** (shown in Fig. 3). Said common battery pack 5 may have any feasible - e.g. known - geometry and/or characteristics deemed suitable for the application and/or restrictions at hand. Moreover, the dual battery system 1 may optionally comprise a heating and/or **cooling system 5** (shown in Fig. 3) at least partly shared by the first battery B1 and the second battery B2. Said heating and/or cooling system 5 may refer to any - e.g. known - feasible battery heating and/or cooling system, and may further for instance comprise a heat pump, cooling plate and/or coolant.

In Fig. 1, **AUX1** and **AUX2** represent any number or type of auxiliary load, such as DCDC converters, AC compressors and/or heaters connected across the first battery B1 and the second battery B2 respectively. **ERAD** represents in an exemplifying manner electrical rear axle drive, whereas **EFAD** in an exemplifying manner represents electrical front axle drive. **OBC**, on other hand, represents an exemplifying on-board charger, whereas **EVSE** represents an exemplifying electric vehicle supply equipment e.g. charging station. Furthermore, for readability, internal contactors of the first battery B1 and the second battery B2, as well as redundant DC-charging-contactors, have been omitted.

The dual battery system 1 is adapted for and/or configured to obtain at least one of data and/or information of a predetermined and/or imminent charging event of the electric vehicle 3. Furthermore, the dual battery system 1 is adapted for and/or configured to obtain at least one of data and/or information of charge level of the first battery B1 and the second battery B2 respectively. Moreover, the dual battery system 1 is adapted for and/or configured to select, when the charge level of the first battery B1 and the second battery B2 are unbalanced, a driving scenario comprising charging and/or discharging of at least one of the first battery B1 and the second battery B2, the driving scenario balancing the charge level of the first battery B1 and the second battery B2 prior to arriving at the predetermined and/or imminent charging event.

That is, different strategies may be applied in order to solve or at least ameliorate balancing issues related to dual battery configurations, in particular related to charging events. It is desirable to provide balancing strategies that are effective in such a way that the charging time per see is not affected negatively. According to the invention, a dual battery configuration is balanced prior to and/or imminent to arrival at a charging event such that charging may occur directly upon arrival to the charging station, without any further actions or activities. Thus, it is desirable with an approach by which the first B1 and second battery B2 of the dual battery system 1 are balanced in terms of charge during driving of the electric vehicle 3 in such a way that upon stopping at the charging station, the batteries B1, B2 are balanced and in a state ready for charging.

That is, as exemplified in Fig. 1, the first battery B1 and the second battery B2 are electrically connectable to one another via a **switch arrangement R1, R2, R3**. Subsequently, the selected driving scenario is effected with support from the switch arrangement R1, R2, R3, the switch arrangement R1, R2, R3 being adapted for and/or configured to enable the first battery B1 and the second battery B2 to be electrically connectable to one another in parallel, electrically connectable to one another in series, and electrically disconnectable from one another. Hence, by means of the switch arrangement R1, R2, R3, the first battery B1 and the second battery B2 are configured to be connectable in parallel or in series to one another, or to be disconnectable from one another, i.e. the first battery and second battery are electrically disconnectable from one another. In this way, the dual battery system 1 as described herein are adapted to support different driving scenarios and/or different charging voltages, which will be described in more detail below.

In an exemplifying **parallel** mode, the first battery B1 and the second battery B2 are electrically connected in parallel, e.g. by means of a switch arrangement R1, R2, R3 such as the exemplifying switch arrangement R1, R2, R3 depicted in Fig. 1 with e.g. R1 closed, R2 open and R3 closed. Hence, both batteries B1, B2 may be involved simultaneously for powering propulsion of the electric vehicle 3 if connected in parallel, such as e.g. during all-wheel-drive, AWD, of the electric vehicle 3. The first battery B1 and the second battery B2 automatically remain balanced in terms of charge level as long as they remain connected in parallel. Thereby, a driving scenario in which the first battery B1 and the second battery B2 are connected in parallel may support an approach for maintaining the charge level of the first battery B1 and the second battery B2 in balance in time for a charging event.

Furthermore, in an exemplifying **disconnect** mode, the first battery B1 and the second battery B2 are electrically disconnected from one another, e.g. by means of a switch arrangement R1, R2, R3 such as the exemplifying switch arrangement R1, R2, R3 depicted in Fig. 1 with e.g. all three of R1, R2 and R3 open. Hence, at least one of the first battery B1 and the second battery B2 may be involved for powering propulsion of the electric vehicle 3 if disconnected from one another, such as e.g. during front-wheel-drive, FWD, of the electric vehicle 3 or rear-wheel-drive, RWD, of the electric vehicle 3, which selectively involves the one of the first B1 or second battery B2 being adapted to provide electric power for driving the electric motor E1, E2 coupled in driving relationship to the one or more front wheels or one or more rear wheels respectively. Thereby, a driving scenario in which the first battery B1 and the second battery B2 are disconnected from one another may support an approach for balancing charge level of the first battery B1 and the second battery B2 respectively, by means of involving only one of the first B1 and second battery B2 for powering propulsion.

Moreover, in an exemplifying **series** mode, the first battery B1 and the second battery B2 are electrically connected in series, e.g. by means of a switch arrangement R1, R2, R3 such as the exemplifying switch arrangement R1, R2, R3 depicted in Fig. 1 with e.g. R1 open, R2 closed and R3 open. Hence, a series mode may be used as a charging mode, providing the possibility to charge the first battery B1 and the second battery B2 simultaneously at a higher charging voltage than when the first battery B1 and the second battery B2 are configured as in the previously discussed parallel mode or disconnect mode.

In this way, the disclosed subject matter supports an approach for which a charging event may be carried out at a first charging voltage and/or at a second charging voltage, the second charging voltage being higher than the first charging voltage, depending on the configuration mode of the dual battery system 1. Moreover, a dual battery system 1 as described herein is adapted to enable selective charging of one of the first battery B1 and the second battery B2 and/or simultaneous charging of the first and second batteries B1, B2 depending on the configuration mode of the dual battery system 1.

Independent of at which charging voltage, and hence in which configuration of the dual battery system 1 a charging event may occur, a balancing of the first battery B1 and the second battery B2 in terms of charge level is desirable and/or may be necessary prior to charging, in order to use the full charging capabilities and to fully charge the first battery B1 and the second battery B2 during a charging event.

Balancing of the charge level of the first battery B 1 and the second battery B2 may be carried out during an arbitrary period of time, for instance ranging from less than a minute up to several minutes or even hours. Moreover, activation of the driving scenario may potentially take place at a later point in time than selection of said driving scenario; i.e. the driving scenario is activated in a timely manner, to meet a timing, remaining time and/or remaining distance to the charging event.

The phrase "at least one of data and information of" may refer to "data and information of", "data or information of", "input indicating" and/or "input data indicating". Moreover, the phrase "obtaining at least one of data or information of" a predetermined and/or imminent charging event may refer to "obtaining charging event input indicating" a predetermined and/or imminent charging event, whereas "obtaining at least one of data or information of charge level" may refer to "obtaining charge level input indicating charge level". "Charging event of the electric vehicle", on the other hand, may refer to "timing, remaining time and/or remaining distance - or estimated timing, remaining time and/or remaining distance - for the electric vehicle to reach an EVSE and/or charging station", whereas "charge level" may refer to "state of charge, SOC". "Obtaining" may throughout refer to "receiving" and/or "deriving", and according to an example further to "obtaining electronically".

The phrase "balancing" in terms of charge level, may refer to "equalizing" in terms of charge level, and charge levels being "substantially equal". The phrase "unbalanced" in terms of charge level may refer to charge levels "not being equal", being "substantially not equal", and/or being "unequal to a predeterminable extent". The phrase "when the charge level of the first battery and the second battery are unbalanced" may refer to "when the charge level of the first battery differs from the charge level of the second battery", "when the charge level of the first battery differs from the charge level of the second battery to a predetermined extent", "when it may be derived that the charge level of the first battery differs from the charge level of the second battery" and/or "should the charge level of the first battery differ from the charge level of the second battery". "Selecting" a driving scenario may refer to "selecting, based on the charging event input and the charge level input" a driving scenario, "selecting in a timely manner" a driving scenario and/or "selecting promptly and/or at a predeterminable point it time" a driving scenario, whereas "prior to arriving" may refer to "in time for arriving" and/or "just in time for arriving". "Arriving at" the charging event, on the other hand, may refer to "reaching" the charging event, whereas "the driving scenario balancing the charge level" may refer to "which driving scenario is adapted to balance the charge level".

Optionally, a driving scenario may comprise propelling the electric vehicle 3 by providing electric power solely from the one battery B 1, B2 of the first battery B 1 and the second battery B2 with highest charge level. Thereby, the one battery B 1, B2 of the first battery B 1 and the second battery B2 with highest charge level is discharged. In this way, the electric vehicle 3 may be driven either in FWD or RWD in order to reach a balanced charge level of the first battery B 1 and the second battery B2. The driving scenario may for instance be effected by the disconnect mode discussed above.

Further optionally, a driving scenario may as an alternative or complement comprise charging of the one battery B 1, B2 of the first battery B1 and the second battery B2 with lowest charge level, by means of regenerative braking of the one or more wheels coupled in driving relationship with the electric motor E1, E2 having an electric power transmission connection with the one battery B 1, B2 with lowest charge level. Thereby, an approach is provided for reaching - and/or at least contributing to reaching - a balanced charge level of the first battery B 1 and the second battery B2.

Moreover, optionally, a driving scenario may as an alternative or complement comprise using excessive power from the one battery B 1, B2 of the first battery B1 and the second battery B2 with highest charge level, by applying an excessive torque on the one or more wheels in driving relationship with the electric motor E1, E2 powered by the one battery B 1, B2 of the first battery B 1 and the second battery B2 with highest charge level, while simultaneously charging the other battery B 1, B2 of the first battery B 1 and the second battery B2 using regenerative braking of the one or more wheels coupled in driving relationship with the electric motor E1, E2 powered by the other battery B 1, B2. Thereby, an approach is provided for reaching - and/or at least contributing to reaching - a balanced charge level of the first battery B 1 and the second battery B2.

Since the full capacity of the electric powertrain may not be needed for propelling the electric vehicle 3, energy may be transferred between the batteries B1, B2, in driving relationship with respective driving axle, i.e. the electric drives. In this way, energy may be transferred without affecting a velocity of the electric vehicle 3 set by a vehicle occupant or a drive control system 7 (shown in Fig. 3) of the electric vehicle 3. Thus, optionally, the selected driving scenario may allow a velocity of the electric vehicle 3 set by a vehicle occupant and/or by a drive control system 7 of the electric vehicle 3, to remain unaffected. The exemplifying drive control system 7 may e.g. refer to a driving assisting system of the electric vehicle 3, such as e.g. a cruise control system, adaptive cruise control system, automated driving system, and/or autonomous driving system etc. Moreover, the term "allows" may refer to "adapted to allow".

Optionally, the selected driving scenario may override any current AWD, RWD or FWD of the electric vehicle (3). Thereby, the selected driving scenario may take precedence over any previous and/or ongoing driving scenario, e.g. set by a vehicle occupant of the electric vehicle 3, and/or a drive control system 7 of the electric vehicle 3 such as the drive control system 7 discussed above.

Optionally, the at least one of data and information of a predetermined and/or imminent charging event may be obtained from a vehicle occupant of the electric vehicle 3, via a **user interface 6** (shown in Fig. 3), and/or obtained from a drive control system 7 of the electric vehicle 3. Thereby, input to an upcoming charging event may be provided to the dual battery system 1 in a convenient manner. The exemplifying user interface 6 may refer to control means enabling a vehicle occupant to interact with the electric vehicle 3 and/or the dual battery system 1, for instance via a touch display, buttons, knobs, pedals and/or microphone etc., whereas the exemplifying drive control system 7 may refer to the previously described drive control system 7.

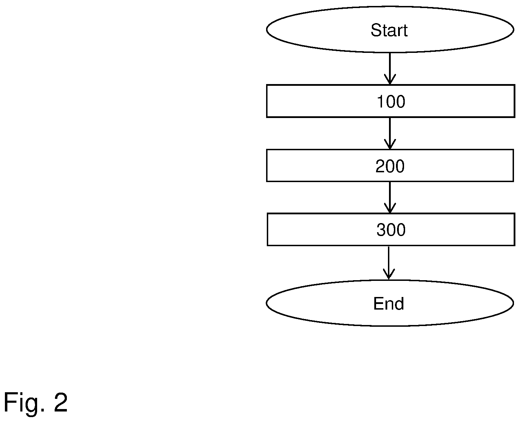

Referring to **Fig. 2**, there is depicted a flowchart of an exemplifying method according to embodiments of the disclosure. The exemplifying method comprises the following action discussed with support from Figs. 1 and 3. The method is performed by a dual battery system 1 comprising a first battery B1 and a second battery B2, for balancing a charge level of the first battery B1 and the second battery respectively B2. The dual battery system 1 is adapted for powering propulsion of an electric vehicle 3 comprising a first electric motor E1 coupled in driving relationship with one or more rear wheels of the electric vehicle 3 and a second electric motor E2 coupled in driving relationship with one or more front wheels of the electric vehicle 3. The first battery B1 is adapted to provide electric power for driving the first electric motor E1 and the second battery B2 is adapted to provide electric power for driving the second electric motor E2.

### Action 100

In Action 100, the dual battery system 1 obtains - e.g. by means of an optional **charging event obtaining unit 101** (shown in Fig. 3) - at least one of data or information of a predetermined and/or imminent charging event of the electric vehicle 3.

### Action 200

In Action 200, the dual battery system 1 obtains - e.g. by means of an optional **charge level obtaining unit 102** (shown in Fig. 3) - at least one of data or information of charge level of the first battery B1 and second battery B2 respectively.

### Action 300

In Action 300, the dual battery system 1 selects - e.g. by means of an optional **driving scenario selecting unit 103** (shown in Fig. 3) - when the charge level of the first battery B1 and the second battery B2 are unbalanced, a driving scenario which comprises charging and/or discharging of at least one of the first battery B1 and the second battery B2, the driving scenario balancing the charge level of the first battery B1 and the second battery B2 prior to arriving at the predetermined and/or imminent charging event.

As further shown in **Fig. 3**, which depicts a schematic block diagram illustrating an exemplifying dual battery system 1 according to embodiments of the disclosure, the dual battery system 1 may comprise the optional charging event obtaining unit 101, the optional charge level obtaining unit 102 and the optional driving scenario selecting unit 103. Furthermore, embodiments herein for balancing charge level of the first battery B1 and the second battery B2 may at least partly be implemented through one or more processors, such as a **processor 104,** here denoted Central Processing Unit (CPU), together with computer program code for performing the functions and actions of embodiments herein. Said program code may also be provided as a computer program product, for instance in the form of a data carrier carrying computer program code for performing the embodiments herein when being loaded into the dual battery system 1. One such carrier may be in the form of a CD ROM disc or DVD, it is however feasible with other data carriers. The computer program code may furthermore be provided as pure program code on a server and downloaded to the dual battery system 1. The dual battery system 1 may further comprise a **memory 105** comprising one or more memory units. The memory 105 may be arranged to be used to store e.g. information, and further to store data, configurations, schedulings, and applications, to perform the methods herein when being executed in the dual battery system 1. Those skilled in the art will also appreciate that said units 101, 102, 103 may refer to a combination of analog and digital circuits, and/or one or more processors configured with software and/or firmware, e.g. stored in a memory such as the memory 104, that when executed by the one or more processors such as the processor 104 perform as described herein. One or more of these processors, as well as the other digital hardware, may be included in a single ASIC (Application-Specific Integrated Circuitry), or several processors and various digital hardware may be distributed among several separate components, whether individually packaged or assembled into a SoC (System-on-a-Chip).

Further shown in **Fig. 3** is the first battery B1, the second battery B2, the optional common battery pack 4, the optional heating and/or cooling system 5, as well as the electric vehicle 3, the optional first and second motors E1, E2, the optional user interface 6, and the optional drive control system 7.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

Various examples have been described. These and other examples are within the scope of the following claims.

## Claims

1. Method performed by a dual battery system (1) comprising a first battery (B 1) and a second battery (B2), for balancing charge level of the first battery (B1) and the second battery (B2), the dual battery system (1) being adapted for powering propulsion of an electric vehicle (3) comprising a first electric motor (E1) coupled in driving relationship with one or more rear wheels of the electric vehicle (3) and a second electric motor (E2) coupled in driving relationship with one or more front wheels of the electric vehicle (3), the first battery (B1) being adapted to provide electric power for driving the first electric motor (E1) and the second battery (B2) being adapted to provide electric power for driving the second electric motor (E2), the first battery (B1) and the second battery (B2) further - with support from a switch arrangement (R1, R2, R3) - being electrically connectable to one another in parallel, electrically connectable to one another in series and electrically disconnectable from one another, the method comprising:
- ***obtaining*** (100) data and/or information of a predetermined charging event of the electric vehicle (3) referring to estimated timing, remaining time and/or remaining distance for the electric vehicle to reach an electric vehicle supply equipment, EVSE, and/or charging station,
- ***obtaining*** (200) data and/or information of charge level of the first battery (B1) and second battery (B2) respectively, and
- ***selecting*** (300) when the charge level of the first battery (B1) and the second battery (B2) are unbalanced, a driving scenario which comprises charging and/or discharging of at least one of the first battery (B1) and the second battery (B2), the driving scenario effected with support from said switch arrangement (R1, R2, R3) balancing the charge level of the first battery (B1) and the second battery (B2) in a timely manner prior to arriving at the predetermined charging event to enable charging directly upon arrival at the EVSE and/or charging station.

2. The method according to claim 1, wherein the selected driving scenario comprises propelling the electric vehicle (3) by providing electric power solely from the one battery (B1, B2) of the first battery (B1) and the second battery (B2), with highest charge level.

3. The method according to claim 1 or 2, wherein the selected driving scenario comprises charging of the one battery (B1, B2) of the first battery (B1) and the second battery (B2) with lowest charge level, by means of regenerative braking of the one or more wheels coupled in driving relationship with the electric motor (E1, E2) having an electric power transmission connection with the one battery (B1, B2) with lowest charge level.

4. The method according to any one of the preceding claims, wherein the selected driving scenario comprises using excessive power from the one battery (B1, B2) of the first (B1) and second battery (B2) with highest charge level, by applying an excessive torque on the one or more wheels in driving relationship with the electric motor(E1, E2) powered by the one battery (B1, B2) with highest charge level, while simultaneously charging the other battery (B1, B2) of the first(B1) and second battery (B2) using regenerative braking of the one or more wheels coupled in driving relationship with the electric motor (E1, E2) powered by the other battery (B1, B2)of the first (B1) and second battery (B2).

5. The method according to claim 4, wherein the selected driving scenario allows a velocity of the electric vehicle (3) set by a vehicle occupant and/or by a drive control system (7) of the electric vehicle (3), to remain unaffected.

6. The method according to any one of the preceding claims, wherein the selected driving scenario overrides any current all-wheel drive, AWD, rear-wheel drive, RWD, or front-wheel drive, FWD, of the electric vehicle (3).

7. The method according to any one of the preceding claims, wherein the data and/or information of a predetermined and/or imminent charging event is obtained from a vehicle occupant of the electric vehicle (3), via a user interface (6), and/or obtained from a drive control system (7) of the electric vehicle (3).

8. A **dual battery system** (1) comprising a first battery (B1), a second battery (B2), for balancing charge level of the first battery (B1) and the second battery (B2), and a switch arrangement (R1,R2,R3), the dual battery system (B1) being adapted for powering propulsion of an electric vehicle (3) comprising a first electric motor (E1) coupled in driving relationship with one or more rear wheels of the electric vehicle (3)and a second electric motor (E2) coupled in driving relationship with one or more front wheels of the electric vehicle (#), the first battery (B1) being adapted to provide electric power for driving the first electric motor (E1) and the second battery (B2) being adapted to provide electric power for driving the second electric motor (E2), the first battery (B1) and the second battery (B2) further - with support from said switch arrangement (R1, R2, R3) - being electrically connectable to one another in parallel, electrically connectable to one another in series and electrically disconnectable from one another, the dual battery system (1) being adapted to:
- obtain (100) data and/or information of a predetermined charging event of the electric vehicle (3) referring to estimated timing, remaining time and/or remaining distance for the electric vehicle to reach an electric vehicle supply equipment, EVSE, and/or charging station,
- obtain (200) data and/or information of charge level of the first battery (B1) and the second battery (B2) respectively, and
- selecting (300) when the charge level of the first battery (B1) and the second battery (B2) are unbalanced, a driving scenario comprising charging and/or discharging of at least one of the first battery (B1) and the second battery (B2), the driving scenario effected with support from said switch arrangement (R1, R2, R3) balancing the charge level of the first battery (B1) and the second battery (B2) in a timely manner prior to arriving at the predetermined and/or imminent charging event to enable charging directly upon arrival at the EVSE and/or charging station.

9. The dual battery system (1) according to claim 8, wherein the selected driving scenario comprises propelling the electric vehicle (3) by providing electric power solely from the one battery (B1, B2) of the first battery (B1) and the second battery (B2), with highest charge level.

10. The dual battery system (1) according to claim 8 or 9, wherein the selected driving scenario comprises charging of the one battery (B1, B2) of the first battery (B1) and the second battery (B2) with lowest charge level, by means of regenerative braking of the one or more wheels coupled in driving relationship with the electric motor (E1, E2) having an electric power transmission connection with the one battery (B1, B2) with lowest charge level.

11. The dual battery system (1) according to any one of claims 8 to 10, wherein the selected driving scenario comprises using excessive power from the one battery (B1, B2) of the first (B1) and second battery (B2) with highest charge level, by applying an excessive torque on the one or more wheels in driving relationship with the electric motor (E1, E2) powered by the one battery (B1, B2) with highest charge level, while simultaneously charging the other battery (B1, B2) of the first (B1) and second battery (B2) using regenerative braking of the one or more wheels coupled in driving relationship with the electric motor (E1, E2) powered by the other battery (B1, B2) of the first (B1) and second battery (B2).

12. The dual battery system according to claim 11, wherein the selected driving scenario allows a velocity of the electric vehicle (3) set by a vehicle occupant and/or a drive control system (7) of the electric vehicle (3), to remain unaffected.

13. The dual battery system according to any one of claims 8 to 12, wherein the selected driving scenario overrides any current all-wheel drive, AWD, rear-wheel drive, RWD, or front-wheel drive, FWD, of the electric vehicle (3).

14. The dual battery system (1) according to any one of claims 8 to 13, wherein the data and/or information of a predetermined and/or imminent charging event is obtained from a vehicle occupant of the electric vehicle (3), via a user interface (6), and/or obtained from a drive control system (7) of the electric vehicle (3).

15. An **electric vehicle** (3) comprising a first electric motor (E1) coupled in driving relationship to one or more rear wheels of the electric vehicle (3) and a second electric motor (E2) coupled in driving relationship to one or more front wheels of the electric vehicle (3), the electric vehicle (3) comprising the dual battery system (1) according to any one of claims 8-14.

## Patentansprüche

1. Verfahren, das durch ein duales Batteriesystem (1) durchgeführt wird, das eine erste Batterie (B1) und eine zweite Batterie (B2) umfasst, zum Ausgleichen eines Ladungsniveaus der ersten Batterie (B1) und der zweiten Batterie (B2), wobei das duale Batteriesystem (1) dazu ausgelegt ist, einen Vortrieb eines Elektrofahrzeugs (3) mit Leistung zu versorgen, das einen ersten Elektromotor (E1), der in Antriebsbeziehung mit einem oder mehreren Hinterrädern des Elektrofahrzeugs (3) gekoppelt ist, und einen zweiten Elektromotor (E2), der in Antriebsbeziehung mit einem oder mehreren Vorderrädern des Elektrofahrzeugs (3) gekoppelt ist, umfasst, wobei die erste Batterie (B1) dazu ausgelegt ist, elektrische Leistung zum Antreiben des ersten Elektromotors (E1) bereitzustellen, und die zweite Batterie (B2) dazu ausgelegt ist, elektrische Leistung zum Antreiben des zweiten Elektromotors (E2) bereitzustellen, wobei die erste Batterie (B1) und die zweite Batterie (B2) ferner - mit Unterstützung von einer Schaltanordnung (R1, R2, R3) - parallel elektrisch miteinander verbindbar, in Reihe elektrisch miteinander verbindbar und elektrisch voneinander trennbar sind, wobei das Verfahren Folgendes umfasst:
- ***Erlangen*** (100) von Daten und/oder Informationen eines vorbestimmten Ladeereignisses des Elektrofahrzeugs (3), die sich auf geschätzte Zeitsteuerung, verbleibende Zeit und/oder verbleibende Strecke beziehen, damit das Elektrofahrzeug eine Stromversorgung für Elektrofahrzeuge, EVSE, und/oder Ladestation erreicht,
- ***Erlangen*** (200) von Daten und/oder Informationen des Ladungsniveaus der ersten Batterie (B1) bzw. zweiten Batterie (B2) und
- ***Auswählen*** (300) eines Antriebsszenarios, das Laden und/oder Entladen mindestens einer der ersten Batterie (B1) und der zweiten Batterie (B2) umfasst, wenn das Ladungsniveau der ersten Batterie (B1) und der zweiten Batterie (B2) unausgeglichen sind, wobei das Antriebsszenario mit Unterstützung von der Schaltanordnung (R1, R2, R3) bewirkt wird, die das Ladungsniveau der ersten Batterie (B1) und der zweiten Batterie (B2) rechtzeitig vor dem Ankommen an dem vorbestimmten Ladeereignis ausgleicht, um das Laden direkt bei Ankunft an der EVSE und/oder Ladestation zu ermöglichen.

2. Verfahren nach Anspruch 1, wobei das ausgewählte Antriebsszenario Vortreiben des Elektrofahrzeugs (3) durch Bereitstellen von elektrischer Leistung lediglich aus der einen Batterie (B1, B2) der ersten Batterie (B1) und der zweiten Batterie (B2) mit dem höchsten Ladungsniveau umfasst.

3. Verfahren nach Anspruch 1 oder 2, wobei das ausgewählte Antriebsszenario Laden der einen Batterie (B1, B2) der ersten Batterie (B1) und der zweiten Batterie (B2) mit dem niedrigsten Ladungsniveau mittels Nutzbremsen des einen oder der mehreren Räder, die in Antriebsbeziehung mit dem Elektromotor (E1, E2) gekoppelt sind, der eine Verbindung zur Übertragung von elektrischer Leistung mit der einen Batterie (B1, B2) mit dem niedrigsten Ladungsniveau aufweist, umfasst.

4. Verfahren nach einem der vorhergehenden Ansprüche, wobei das ausgewählte Antriebsszenario Verwenden überschüssiger Leistung aus der einen Batterie (B1, B2) der ersten (B1) und zweiten Batterie (B2) mit dem höchsten Ladungsniveau durch Anwenden eines überschüssigen Drehmoments auf das eine oder die mehreren Räder in Antriebsbeziehung mit dem Elektromotor (E1, E2), der durch die eine Batterie (B1, B2) mit dem höchsten Ladungsniveau mit Leistung versorgt wird, während gleichzeitigen Ladens der anderen Batterie (B1, B2) der ersten (B1) und zweiten Batterie (B2) unter Verwendung von Nutzbremsen des einen oder der mehreren Räder, die in Antriebsbeziehung mit dem Elektromotor (E1, E2) gekoppelt sind, der durch die andere Batterie (B1, B2) der ersten (B1) und zweiten Batterie (B2) mit Leistung versorgt wird, umfasst.

5. Verfahren nach Anspruch 4, wobei das ausgewählte Antriebsszenario zulässt, dass eine Geschwindigkeit des Elektrofahrzeugs (3), die durch einen Fahrzeuginsassen und/oder durch ein Antriebssteuersystem (7) des Elektrofahrzeugs (3) festgelegt ist, unbeeinflusst bleibt.

6. Verfahren nach einem der vorhergehenden Ansprüche, wobei das ausgewählte Antriebsszenario einen etwaigen derzeitigen Allradantrieb, AWD, Hinterradantrieb, RWD, oder Vorderradantrieb, FWD, des Elektrofahrzeugs (3) außer Kraft setzt.

7. Verfahren nach einem der vorhergehenden Ansprüche, wobei die Daten und/oder Informationen eines vorbestimmten und/oder bevorstehenden Ladeereignisses von einem Fahrzeuginsassen des Elektrofahrzeugs (3) über eine Benutzerschnittstelle (6) erlangt werden und/oder von einem Antriebssteuersystem (7) des Elektrofahrzeugs (3) erlangt werden.

8. Duales Batteriesystem (1), das eine erste Batterie (B1), eine zweite Batterie (B2), zum Ausgleichen eines Ladungsniveaus der ersten Batterie (B1) und der zweiten Batterie (B2), und eine Schaltanordnung (R1, R2, R3) umfasst, wobei das duale Batteriesystem (B1) dazu ausgelegt ist, einen Vortrieb eines Elektrofahrzeugs (3) mit Leistung zu versorgen, das einen ersten Elektromotor (E1), der in Antriebsbeziehung mit einem oder mehreren Hinterrädern des Elektrofahrzeugs (3) gekoppelt ist, und einen zweiten Elektromotor (E2), der in Antriebsbeziehung mit einem oder mehreren Vorderrädern des Elektrofahrzeugs (#) gekoppelt ist, umfasst, wobei die erste Batterie (B1) dazu ausgelegt ist, elektrische Leistung zum Antreiben des ersten Elektromotors (E1) bereitzustellen, und die zweite Batterie (B2) dazu ausgelegt ist, elektrische Leistung zum Antreiben des zweiten Elektromotors (E2) bereitzustellen, wobei die erste Batterie (B1) und die zweite Batterie (B2) ferner - mit Unterstützung von der Schaltanordnung (R1, R2, R3) - parallel elektrisch miteinander verbindbar, in Reihe elektrisch miteinander verbindbar und elektrisch voneinander trennbar sind, wobei das duale Batteriesystem (1) zu Folgendem ausgelegt ist:
- Erlangen (100) von Daten und/oder Informationen eines vorbestimmten Ladeereignisses des Elektrofahrzeugs (3), die sich auf geschätzte Zeitsteuerung, verbleibende Zeit und/oder verbleibende Strecke beziehen, damit das Elektrofahrzeug eine Stromversorgung für Elektrofahrzeuge, EVSE, und/oder Ladestation erreicht,
- Erlangen (200) von Daten und/oder Informationen des Ladungsniveaus der ersten Batterie (B1) bzw. der zweiten Batterie (B2) und
- Auswählen (300) eines Antriebsszenarios, das Laden und/oder Entladen mindestens einer der ersten Batterie (B1) und der zweiten Batterie (B2) umfasst, wenn das Ladungsniveau der ersten Batterie (B1) und der zweiten Batterie (B2) unausgeglichen sind, wobei das Antriebsszenario mit Unterstützung von der Schaltanordnung (R1, R2, R3) bewirkt wird, die das Ladungsniveau der ersten Batterie (B1) und der zweiten Batterie (B2) rechtzeitig vor dem Ankommen an dem vorbestimmten und/oder bevorstehenden Ladeereignis ausgleicht, um das Laden direkt bei Ankunft an der EVSE und/oder Ladestation zu ermöglichen.

9. Duales Batteriesystem (1) nach Anspruch 8, wobei das ausgewählte Antriebsszenario Vortreiben des Elektrofahrzeugs (3) durch Bereitstellen von elektrischer Leistung lediglich aus der einen Batterie (B1, B2) der ersten Batterie (B1) und der zweiten Batterie (B2) mit dem höchsten Ladungsniveau umfasst.

10. Duales Batteriesystem (1) nach Anspruch 8 oder 9, wobei das ausgewählte Antriebsszenario Laden der einen Batterie (B1, B2) der ersten Batterie (B1) und der zweiten Batterie (B2) mit dem niedrigsten Ladungsniveau mittels Nutzbremsen des einen oder der mehreren Räder, die in Antriebsbeziehung mit dem Elektromotor (E1, E2) gekoppelt sind, der eine Verbindung zur Übertragung von elektrischer Leistung mit der einen Batterie (B1, B2) mit dem niedrigsten Ladungsniveau aufweist, umfasst.

11. Duales Batteriesystem (1) nach einem der Ansprüche 8 bis 10, wobei das ausgewählte Antriebsszenario Verwenden überschüssiger Leistung aus der einen Batterie (B1, B2) der ersten (B1) und zweiten Batterie (B2) mit dem höchsten Ladungsniveau durch Anwenden eines überschüssigen Drehmoments auf das eine oder die mehreren Räder in Antriebsbeziehung mit dem Elektromotor (E1, E2), der durch die eine Batterie (B1, B2) mit dem höchsten Ladungsniveau mit Leistung versorgt wird, während gleichzeitigen Ladens der anderen Batterie (B1, B2) der ersten (B1) und zweiten Batterie (B2) unter Verwendung von Nutzbremsen des einen oder der mehreren Räder, die in Antriebsbeziehung mit dem Elektromotor (E1, E2) gekoppelt sind, der durch die andere Batterie (B1, B2) der ersten (B1) und zweiten Batterie (B2) mit Leistung versorgt wird, umfasst.

12. Duales Batteriesystem nach Anspruch 11, wobei das ausgewählte Antriebsszenario zulässt, dass eine Geschwindigkeit des Elektrofahrzeugs (3), die durch einen Fahrzeuginsassen und/oder ein Antriebssteuersystem (7) des Elektrofahrzeugs (3) festgelegt ist, unbeeinflusst bleibt.

13. Duales Batteriesystem nach einem der Ansprüche 8 bis 12, wobei das ausgewählte Antriebsszenario einen etwaigen derzeitigen Allradantrieb, AWD, Hinterradantrieb, RWD, oder Vorderradantrieb, FWD, des Elektrofahrzeugs (3) außer Kraft setzt.

14. Duales Batteriesystem (1) nach einem der Ansprüche 8 bis 13, wobei die Daten und/oder Informationen eines vorbestimmten und/oder bevorstehenden Ladeereignisses von einem Fahrzeuginsassen des Elektrofahrzeugs (3) über eine Benutzerschnittstelle (6) erlangt werden und/oder von einem Antriebssteuersystem (7) des Elektrofahrzeugs (3) erlangt werden.

15. Elektrofahrzeug (3), das einen ersten Elektromotor (E1), der in Antriebsbeziehung an ein oder mehrere Hinterräder des Elektrofahrzeugs (3) gekoppelt ist, und einen zweiten Elektromotor (E2), der in Antriebsbeziehung an ein oder mehrere Vorderräder des Elektrofahrzeugs (3) gekoppelt ist, umfasst, wobei das Elektrofahrzeug (3) das duale Batteriesystem (1) nach einem der Ansprüche 8-14 umfasst.

## Revendications

1. Procédé mis en œuvre par un système de double batterie (1) comprenant une première batterie (B1) et une seconde batterie (B2), pour équilibrer le niveau de charge de la première batterie (B1) et de la seconde batterie (B2), le système de double batterie (1) étant adapté pour alimenter la propulsion d'un véhicule électrique (3) comprenant un premier moteur électrique (E1) couplé en relation d'entraînement avec une ou plusieurs roues arrière du véhicule électrique (3) et un second moteur électrique (E2) couplé en relation d'entraînement avec une ou plusieurs roues avant du véhicule électrique (3), la première batterie (B1) étant adaptée pour fournir de l'énergie électrique pour entraîner le premier moteur électrique (E1) et la seconde batterie (B2) étant adaptée pour fournir de l'énergie électrique pour entraîner le second moteur électrique (E2), la première batterie (B1) et la seconde batterie (B2) en outre, avec le support d'un agencement de commutateurs (R1, R2, R3), pouvant être connectées électriquement l'une avec l'autre en parallèle, pouvant être connectées électriquement l'une avec l'autre en série et pouvant être déconnectées électriquement l'une de l'autre, le procédé comprenant :
- ***l'obtention*** (100) de données et/ou d'informations d'un événement de charge prédéterminé du véhicule électrique (3) faisant référence à un timing estimé, au temps restant et/ou à la distance restante pour que le véhicule électrique atteigne un équipement d'alimentation de véhicule électrique, un EVSE, et/ou une station de recharge,
- ***l'obtention*** (200) de données et/ou d'informations sur le niveau de charge de la première batterie (B1) et de la seconde batterie (B2) respectivement, et
- ***la sélection*** (300) lorsque le niveau de charge de la première batterie (B1) et de la seconde batterie (B2) sont déséquilibrés, d'un scénario de conduite qui comprend la charge et/ou la décharge d'au moins l'une de la première batterie (B1) et de la seconde batterie (B2), le scénario de conduite effectué avec le support dudit agencement de commutateurs (R1, R2, R3) équilibrant le niveau de charge de la première batterie (B1) et de la seconde batterie (B2) en temps opportun avant d'arriver à l'événement de charge prédéterminé pour permettre la recharge directement lors de l'arrivée à l'EVSE et/ou à la station de recharge.

2. Procédé selon la revendication 1, dans lequel le scénario de conduite sélectionné comprend la propulsion du véhicule électrique (3) en fournissant de l'énergie électrique uniquement à partir de l'une batterie (B1, B2) de la première batterie (B1) et de la seconde batterie (B2), ayant le niveau de charge le plus élevé.

3. Procédé selon la revendication 1 ou 2, dans lequel le scénario de conduite sélectionné comprend la charge de l'une batterie (B1, B2) de la première batterie (B1) et de la seconde batterie (B2) avec le niveau de charge le plus faible, au moyen d'un freinage régénératif de l'une ou de plusieurs roues couplées en relation d'entraînement avec le moteur électrique (E1, E2) ayant une connexion de transmission d'énergie électrique avec l'une batterie (B1, B2) ayant le niveau de charge le plus faible.

4. Procédé selon l'une quelconque des revendications précédentes, dans lequel le scénario de conduite sélectionné comprend l'utilisation d'une énergie excessive provenant de l'une batterie (B1, B2) de la première (B1) et de la seconde batterie (B2) avec le niveau de charge le plus élevé, en appliquant un couple excessif sur les une ou plusieurs roues en relation d'entraînement avec le moteur électrique (E1, E2) alimenté par l'une batterie (B1, B2) avec le niveau de charge le plus élevé, tout en chargeant simultanément l'autre batterie (B1, B2) de la première (B1) et de la seconde batterie (B2) en utilisant le freinage régénératif des une ou plusieurs roues couplées en relation d'entraînement avec le moteur électrique (E1, E2) alimenté par l'autre batterie (B1, B2) de la première (B1) et de la seconde batterie (B2).

5. Procédé selon la revendication 4, dans lequel le scénario de conduite sélectionné permet à une vitesse du véhicule électrique (3) définie par un occupant du véhicule et/ou par un système de commande de conduite (7) du véhicule électrique (3), de rester inchangée.

6. Procédé selon l'une quelconque des revendications précédentes, dans lequel le scénario de conduite sélectionné remplace toute transmission intégrale, AWD, propulsion arrière, RWD, ou traction avant, FWD, actuelle du véhicule électrique (3) .

7. Procédé selon l'une quelconque des revendications précédentes, dans lequel les données et/ou informations d'un événement de charge prédéterminé et/ou imminent sont obtenues auprès d'un occupant du véhicule électrique (3), via une interface utilisateur (6), et/ou obtenues à partir d'un système de commande de conduite (7) du véhicule électrique (3).

8. Système de double batterie (1) comprenant une première batterie (B1), une seconde batterie (B2), pour équilibrer le niveau de charge de la première batterie (B1) et de la seconde batterie (B2) et un agencement de commutateurs (R1, R2, R3),
le système de double batterie (B1) étant adapté pour alimenter la propulsion d'un véhicule électrique (3) comprenant un premier moteur électrique (E1) couplé en relation d'entraînement avec une ou plusieurs roues arrière du véhicule électrique (3) et un second moteur électrique (E2) couplé en relation d'entraînement avec une ou plusieurs roues avant du véhicule électrique (#), la première batterie (B1) étant adaptée pour fournir de l'énergie électrique pour entraîner le premier moteur électrique (E1) et la seconde batterie (B2) étant adaptée pour fournir de l'énergie électrique pour entraîner le second moteur électrique (E2), la première batterie (B1) et la seconde batterie (B2) en outre, avec le support dudit agencement de commutateurs (R1, R2, R3), pouvant être électriquement connectées l'une à l'autre en parallèle, pouvant être électriquement connectées l'une à l'autre en série et pouvant être déconnectées électriquement l'une de l'autre, le système de double batterie (1) étant adapté pour :
- obtenir (100) des données et/ou des informations d'un événement de charge prédéterminé du véhicule électrique (3) faisant référence à un timing estimé, au temps restant et/ou à la distance restante pour que le véhicule électrique atteigne un équipement d'alimentation de véhicule électrique, un EVSE, et/ou une station de recharge,
- obtenir (200) des données et/ou des informations sur le niveau de charge de la première batterie (B1) et de la seconde batterie (B2) respectivement, et
- sélectionner (300) lorsque le niveau de charge de la première batterie (B1) et de la seconde batterie (B2) sont déséquilibrés, un scénario de conduite comprenant la charge et/ou la décharge d'au moins l'une de la première batterie (B1) et de la seconde batterie (B2), le scénario de conduite effectué avec le support dudit agencement de commutateurs (R1, R2, R3) équilibrant le niveau de charge de la première batterie (B1) et de la seconde batterie (B2) en temps opportun avant d'arriver à l'événement de charge prédéterminé et/ou imminent pour permettre la recharge directement lors de l'arrivée à l'EVSE et/ou à la station de recharge.

9. Système à double batterie (1) selon la revendication 8, dans lequel le scénario de conduite sélectionné comprend la propulsion du véhicule électrique (3) en fournissant de l'énergie électrique uniquement à partir de l'une batterie (B1, B2) de la première batterie (B1) et de la seconde batterie (B2), ayant le niveau de charge le plus élevé.

10. Système de double batterie (1) selon la revendication 8 ou 9, dans lequel le scénario de conduite sélectionné comprend la charge de l'une batterie (B1, B2) de la première batterie (B1) et de la seconde batterie (B2) ayant le niveau de charge le plus faible, par des moyens de freinage régénératif des une ou plusieurs roues couplées en relation d'entraînement avec le moteur électrique (E1, E2) ayant une connexion de transmission d'énergie électrique avec l'une batterie (B1, B2) ayant le niveau de charge le plus faible.

11. Système de double batterie (1) selon l'une quelconque des revendications 8 à 10, dans lequel le scénario de conduite sélectionné comprend l'utilisation d'une énergie excessive provenant de l'une batterie (B1, B2) de la première (B1) et de la seconde batterie (B2) ayant le niveau de charge le plus élevé, en appliquant un couple excessif sur les une ou plusieurs roues en relation d'entraînement avec le moteur électrique (E1, E2) alimenté par l'une batterie (B1, B2) ayant le niveau de charge le plus élevé, tout en chargeant simultanément l'autre batterie (B1, B2) de la première (B1) et de la seconde batterie (B2) en utilisant le freinage régénératif des une ou plusieurs roues couplées en relation d'entraînement avec le moteur électrique (E1, E2) alimenté par l'autre batterie (B1, B2) de la première (B1) et de la seconde batterie (B2).

12. Système de double batterie selon la revendication 11, dans lequel le scénario de conduite sélectionné permet à une vitesse du véhicule électrique (3) définie par un occupant du véhicule et/ou un système de commande de conduite (7) du véhicule électrique (3), de rester inchangée.

13. Système de double batterie selon l'une quelconque des revendications 8 à 12, dans lequel le scénario de conduite sélectionné remplace toute transmission intégrale, AWD, propulsion arrière, RWD, ou traction avant, FWD, actuelle du véhicule électrique (3).

14. Système de double batterie (1) selon l'une quelconque des revendications 8 à 13, dans lequel les données et/ou informations d'un événement de charge prédéterminé et/ou imminent sont obtenues auprès d'un occupant du véhicule électrique (3), via une interface utilisateur (6), et/ou obtenues à partir d'un système de commande de conduite (7) du véhicule électrique (3).

15. Véhicule électrique (3) comprenant un premier moteur électrique (E1) couplé en relation d'entraînement à une ou plusieurs roues arrière du véhicule électrique (3) et un second moteur électrique (E2) couplé en relation d'entraînement à une ou plusieurs roues avant du véhicule électrique (3), le véhicule électrique (3) comprenant le système de double batterie (1) selon l'une quelconque des revendications 8 à 14.
